# EUROPEAN PATENT SPECIFICATION

(11) **EP 3 453 028 B1**
(45) Date of publication and mention of the grant of the patent: **15.04.2020**
(21) Application number: 17733007.3
(22) Date of filing: 04.05.2017
(51) Int. Cl.: G21C 7/08, G21C 9/027, G21C 1/03, G21C 1/14

(54) **NUCLEAR REACTOR, WITH SHUTDOWN RODS WITH INTERVENTION BY MEANS OF FLOAT**
KERNREAKTOR MIT ABSCHALTSTÄBEN ZUR INTERVENTION MITTELS SCHWIMMER
RÉACTEUR NUCLÉAIRE À BARRES D'ARRÊT AVEC INTERVENTION AU MOYEN D'UN FLOTTEUR

(30) Priority: 04.05.2016 IT UA20163716
(43) Date of publication of application: 13.03.2019
(73) Proprietor: Hydromine Nuclear Energy S.A.R.L., 1273 Luxembourg (LU)
(72) Inventor: CINOTTI, Luciano, 16036 Recco (IT)
(74) Representative: Cernuzzi, Daniele
(86) International application number: PCT/IB2017/052611
(87) International publication number: WO 2017/191597

(56) References cited:
- EP-A2- 0 375 230
- FR-A- 1 487 533
- JP-A- H06 230 164
- US-A1- 2008 310 575

## Description

### TECHNICAL FIELD

The present invention concerns a nuclear reactor, in particular a nuclear reactor cooled by a high density coolant and having a plurality of shutdown rods.

### PRIOR ART

In current practice nuclear reactors include a core, positioned in the lower part of the main vessel of the reactor, immersed in the primary fluid and formed of fuel elements supported by a supporting grid or suspended from the upper part. Reactor control rods are furthermore interposed between the fuel elements; exceptionally, in small-medium sized fast reactors, the control rods are positioned on the periphery of the core.

In some accident sequences, such as stoppage of all the primary pumps, it is necessary to switch the reactor off very rapidly to avoid excessive heating of the fuel; this stoppage is obtained by insertion of control rods with a command which is generally processed by logics and as such is subject to risks of failure.

The patent application MI2007A001685 describes a solution with circulation pumps for circulating the primary fluid, immersed in the hot manifold, but nothing is said about the functioning of the shutdown rods.

### SUBJECT OF THE INVENTION

An object of the present invention is to provide a nuclear reactor that overcomes the drawbacks highlighted of the known solutions and has further construction and safety advantages. The present invention therefore concerns a nuclear reactor, as defined in the attached claim 1, with ancillary characteristics and plant configurations defined in the dependent claims.

### BRIEF DESCRIPTION OF THE DRAWINGS

The invention is described in the following non-limiting embodiment example, with reference to the figures of the attached drawings, in which:
- figure 1 is an overall schematic view in longitudinal section of a nuclear reactor according to the invention;
- figure 2 is a schematic view in longitudinal section of a portion of the reactor of figure 1;
- figures 3a, 3b, 3c are enlarged details of figures 1 and 2.

### PREFERRED EMBODIMENT OF THE INVENTION

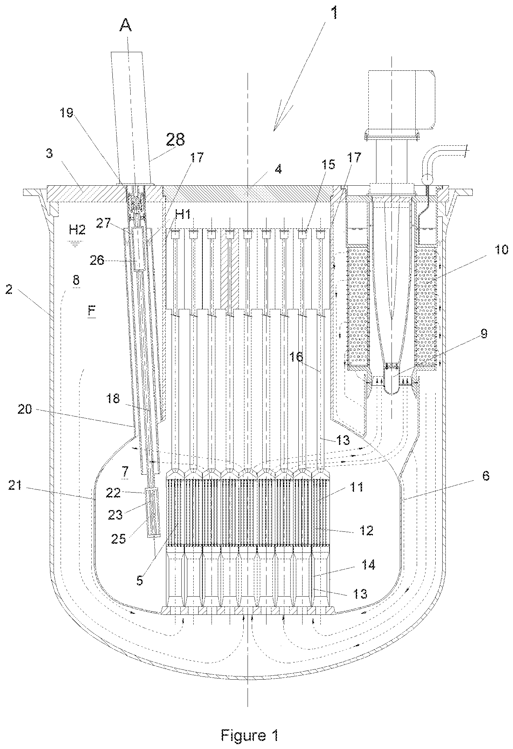

With reference to figure 1, showing in particular a nuclear reactor 1 cooled by high density primary fluid such as lead, the nuclear reactor 1 comprises a substantially cup- or pool-shaped vessel 2, a radially external fixed closing structure 3 and a radially internal mobile closing structure 4, positioned above the vessel 2 with the fixed closing structure 3 positioned radially on the outside and around the mobile closing structure 4. The mobile closing structure 4 is a component consisting of various elements such as a plurality of rotating plugs at the same time forming part of the fuel transfer means and the primary containment structures, known in the art and therefore not described in detail.

The vessel 2 contains a core 5 and a hydraulic separation structure 6 delimiting a hot manifold 7 and a cold manifold 8 in which a primary cooling fluid F circulates for cooling the core 5. The primary fluid F has a free surface which in normal operation of the reactor 1 is at different levels H1, H2 in the manifolds 7, 8. Inside the vessel 2, circulation pumps 9 are housed for circulating the primary fluid F, in addition to heat exchangers 10, through which the primary fluid F flows to transfer the power generated in the core 5 to a secondary fluid, and other components which are known and not illustrated. It is understood that the circulation pumps 9 of the primary fluid F and the heat exchangers 10 can also be positioned outside the vessel 2.

The hydraulic separation structure 6 is preferably amphora-shaped according to the solution known from the patent application GE2015A0000330 and is suspended from the fixed closing structure 3 of the vessel 2.

The mobile closing structure 4 is positioned above the core 5 along a central axis of the reactor 1 and the fixed closing structure 3 is positioned, with reference to the central axis of the reactor 1, radially external to the mobile closing structure 4 and around the mobile closing structure 4, which is therefore radially internal to the radially external fixed closing structure 3. In other words, the mobile closing structure 4 and the fixed closing structure 3 are respectively radially internal and radially external with respect to the central axis of the reactor 1 and to the core 5.

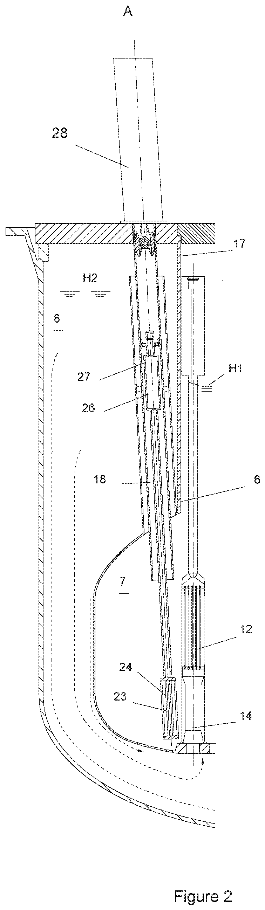

With reference also to figure 2, the core 5 comprises a plurality of fuel elements 11 which have respective active parts 12 and respective service parts 13; in particular, the service part 13 of each fuel element 11 comprises a foot 14 and a head 15 respectively positioned at the bottom and at the top of the fuel element 11 and a connection shaft 16 connecting the active part 12 and the head 15.

The heads 15 of the fuel elements 11 are circumferentially contained within the upper portion 17 of the separation structure 6 of which it constitutes the mechanical connection to the fixed closing structure 3. The upper portion 17 of the separation structure 6 contains at the top also the mobile closing structure 4.

The reactor is characterized by a plurality of shutdown rods 18, which are inserted in respective penetrations 19 of the fixed closing structure 3 and are therefore located outside the mobile closing structure 4 and outside the upper portion 17 of the separation structure 6, and re-enter lower down in the separation structure 6 through respective ducts 20 engaging the radially wider lower portion 21 of said separation structure 6 and extending above the free level H2 of the cold manifold 8. The shutdown rods 18 extend downwards in the vicinity of the core 5, with respective end portions 22 provided with respective absorbers 23.

Alternatively, the shutdown rods 18 can be inserted in penetrations of the mobile closing structure 4 and occupy typical positions of the fuel elements, not indicated in the drawings since they are the subject of known and consolidated applications.

The rods 18 perform the function of shutdown of the reactor by means of translation along respective axes A to bring respective neutron absorbers 23 from a lower position 24, facing the feet 14, at maximum distance from the active part 12 of the core 5, to a higher position 25 facing the active part 12 of the core 5 at maximum proximity to it.

Each of the shutdown rods 18 are provided with a float 26 consisting of a cylindrical casing 27 containing gas inside it which, as the level H1 of the hot manifold 7 varies, determines the position of the neutron absorber 23 with respect to the active part 12 of the core 5 in a condition of disconnection from the control mechanism 28 known in the art.

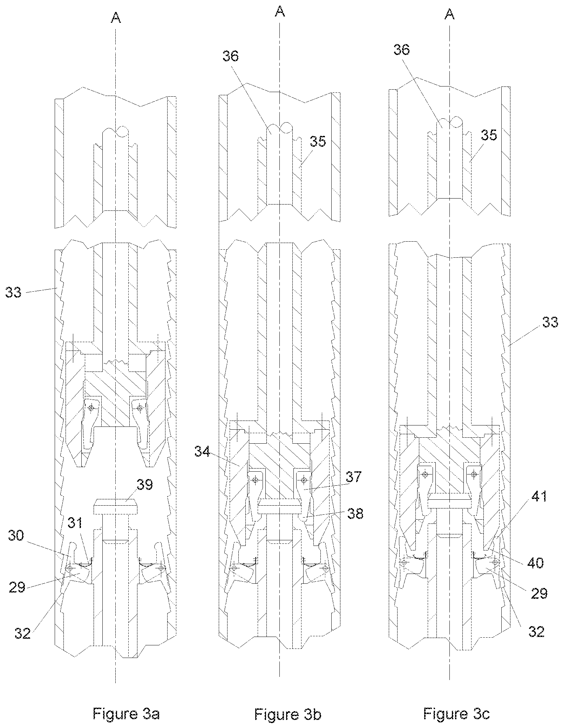

With reference also to figure 3a, the shutdown rod 18 is provided with a non-return device 29 consisting of a plurality of levers 30 which, forced by an elastic element 31, engage on the saw tooth-shaped internal profile 32 of the cylindrical duct 33 in which the shutdown rod 18 runs.

With reference also to figure 3b, a gripper 34, known in the art, belonging to the control device 28, can translate along the axis A of the shutdown rod 18 and, by means of a longer stroke of the external bar 35 with respect to the internal bar 36 and an interaction of cams 37 and latches 38 of the control device 28, engage on the head 39 of the shutdown rod 18 with the possibility of movement towards the top of the latter.

With reference also to figure 3c, the continuation of the stroke of the external bar 35 with respect to the bar 36 internal to it allows the shaped end 40 of the gripper 34 to engage on the upper internal profile 41 of the levers 30, disengaging them from the saw tooth-shaped internal profile 32 of the cylindrical duct 33, also permitting controlled vertical sliding of the shutdown rod 18.

From the above, the advantages of the present invention are evident.
- The support of the shutdown rods 18 on the outside of the mobile closing structure 4 and on the outside of the core 5 guarantees complete mechanical decoupling between the core 5 of the reactor and the shutdown rods 18 and in particular the thermal expansions or swellings of the fuel elements subject to neutron irradiation do not interfere with the movement of the rods.
- The shutdown system 18 controlled by float allows shutdown of the core due to increase in the level H1 of the primary coolant following slow-down of the circulation pumps 9, whatever the cause, and therefore constitutes a particularly reliable and diversified passive shutdown system of the reactor in the presence of a reduction in the primary coolant flow rate.
- The shutdown system 18 controlled by float cannot be de-activated by a subsequent uncontrolled acceleration of the primary pumps 9 due to the non-return device 31 which can be de-activated only by a programmed intervention to restore the mechanical connection between shutdown rod 18 and its control mechanism 28.

- The anchoring of the shutdown rods 18 to the external fixed structure (3) makes refuelling possible without having to disconnect the control mechanisms 28 of the shutdown rods 18 in order to move the mobile closing structure 4 which in the traditional solutions constitutes the support of the control rods.
- The shutdown rods 18 do not occupy positions within the core 5 which consequently can be reduced in diameter.
- The absence of structural material of the shutdown rods inside the core 5 allows reduction of the quantity of fissile material inside the core.
- The absence of positions intended for shutdown rods inside the core 5 reduces the heterogeneity of the core and the associated power and temperature gradients.

Lastly it is understood that numerous modifications and variations can be made to the reactor described and illustrated here that do not depart from the scope of the attached claims.

## Claims

1. A nuclear reactor (1), comprising a vessel (2) closed at the top by a fixed closing structure (3) and a mobile closing structure (4), and containing a core (5) and a hydraulic separation structure (6) delimiting a hot manifold (7) and a cold manifold (8) in which a primary fluid (F) for cooling the core (5) circulates, with a first free surface (H1) in the hot manifold (7) which, during normal operation of the reactor (1), is different from a second free surface (H2) in the cold manifold (8); the nuclear reactor (1) comprising circulation pumps (9) for circulating the primary fluid (F) and heat exchangers (10);
**characterized in that** the core (5) comprises shutdown rods (18) which are operated by at least one float (26) which, via a down-up movement, positions respective neutron absorbers (23) near the active part (12) of the core when the level (H1) of the primary fluid (F) increases due to slowing down of the circulation pumps (9); and wherein a non-return device (29) allows upward displacement of the shutdown rods (18) and blocks the downward displacements to prevent falling in the event of untimely acceleration of the circulation pumps (9).

2. A nuclear reactor (1) according to claim 1, wherein a control mechanism (28) which engages first on the head (39) of the shutdown rod (18) and then on the non-return device (29) allows, by a programmed intervention, safe reactuation of the shutdown rod (18) and in particular relocation of the respective absorbers (23) in the position farthest from the active part (12) of the reactor core (5).

3. A nuclear reactor (1) according to claim 1 or 2, wherein the shutdown rods (18) are inserted in penetrations (19) of the external fixed closing structure (3) and are therefore located outside the internal mobile closing structure (4) and the upper portion (17) of the separation structure (6) containing the heads (15) of the fuel elements (12), and re-enter the wider lower portion (21) of the separation structure (6) via ducts (20), which extend from the wall of the hydraulic separation structure (6) above the free surface (H2) of the cold manifold (8).

## Patentansprüche

1. Kernreaktor (1) mit einem Behälter (2), der an der Oberseite verschlossen ist über eine feste Verschluss-Struktur (3) und eine bewegliche Verschluss-Struktur (4) und einen Kern (5) beinhaltet sowie eine hydraulische Trennstruktur (6), welche einen Heißverteiler (7) und einen Kaltverteiler (8), in dem ein primäres Fluid (F) zum Kühlen des Kernes (5) zirkuliert, begrenzt, mit einer ersten freien Oberfläche (H1) in dem Heißverteiler (7), die während des normalen Betriebs des Reaktors (1) unterschiedlich ist zu einer zweiten freien Oberfläche (H2) in dem Kaltverteiler (8); wobei der Kernreaktor (1) Umwälzpumpen (9) umfasst zum Umwälzen des primären Fluids (F) und Wärmetauscher (10); **dadurch gekennzeichnet, dass** der Kern (5) Abschaltstäbe (18) umfasst, die über wenigstens einen Schwebekörper (26) betätigt werden, der über eine Abwärts- und Aufwärtsbewegung jeweilige Neutronenabsorber (23) nahe dem aktiven Teil (12) des Kerns positioniert, wenn das Niveau (H1) des primären Fluids (F) ansteigt aufgrund des Langsamerwerdens der Umwälzpumpen (9);
und wobei eine Rücklaufsperre (29) eine Bewegung der Abschaltstäbe (18) nach oben erlaubt und die abwärts gerichteten Bewegungen blockiert, um einen Abfall im Falle einer unpassenden Beschleunigung der Umwälzpumpen (9) zu verhindern.

2. Kernreaktor (1) nach Anspruch 1, wobei ein Steuermechanismus (28), der zunächst an dem Kopf (39) des Abschaltstabs (18) angreift und dann an der Rücklaufsperre (29), durch eine programmierte Maßnahme eine sichere Wiederbetätigung des Abschaltstabs (18) erlaubt und insbesondere eine Wiederanordnung der jeweiligen Absorber (23) in der Position am weitesten von dem aktiven Teil (12) des Reaktorkerns (5) weg.

3. Kernreaktor (1) nach Anspruch 1 oder 2, wobei die Abschaltstäbe (18) eingesetzt sind in Durchdringungen (19) der außen liegenden, festen Verschluss-Struktur (3) und daher außerhalb der innen liegenden, beweglichen Verschluss-Struktur (4) und dem die Köpfe (15) der Brennelemente (12) beinhaltenden oberen Teil (17) der Trennstruktur (6) angeordnet sind und wieder eintreten in den weiteren unteren Teil (21) der Trennstruktur (6) über Kanäle (20), welche sich von der Wand der hydraulischen Trennstruktur (6) oberhalb der freien Oberfläche (H2) des Kaltverteilers (8) erstrecken.

## Revendications

1. Réacteur nucléaire (1), comprenant une cuve (2) fermée au sommet par une structure de fermeture fixe (3) et une structure de fermeture mobile (4), et contenant un cœur (5) et une structure de séparation hydraulique (6) délimitant un collecteur chaud (7) et un collecteur froid (8) dans lesquels circule un fluide primaire (F) pour refroidir le cœur (5), avec une première surface libre (H1) dans le collecteur chaud (7) qui, pendant le fonctionnement normal du réacteur (1), est différente d'une deuxième surface libre (H2) dans le collecteur froid (8) ; le réacteur nucléaire (1) comprenant des pompes de circulation (9) pour faire circuler le fluide primaire (F) et des échangeurs de chaleur (10) ;
**caractérisé en ce que**
le cœur (5) comprend des barres d'arrêt (18) qui sont actionnées par au moins un flotteur (26) qui, par un mouvement de bas en haut, positionne des absorbeurs de neutrons (23) respectifs près de la partie active (12) du cœur quand le niveau (H1) du fluide primaire (F) augmente en raison d'un ralentissement des pompes de circulation (9) ;
et dans lequel un dispositif antiretour (29) permet un déplacement ascendant des barres d'arrêt (18) et bloque les déplacements descendants pour empêcher une chute en cas d'accélération inopportune des pompes de circulation (9).

2. Réacteur nucléaire (1) selon la revendication 1, dans lequel un mécanisme de commande (28) qui s'enclenche d'abord sur la tête (39) de la barre d'arrêt (18) et ensuite sur le dispositif antiretour (29) permet, par une intervention programmée, un réenclenchement sûr de la barre d'arrêt (18) et en particulier un repositionnement des absorbeurs respectifs (23) à la position la plus éloignée de la partie active (12) du cœur de réacteur (5).

3. Réacteur nucléaire (1) selon la revendication 1 ou 2, dans lequel les barres d'arrêt (18) sont insérées dans des traversées (19) de la structure de fermeture fixe externe (3) et sont par conséquent situées à l'extérieur de la structure de fermeture mobile interne (4) et de la partie supérieure (17) de la structure de séparation (6) contenant les têtes (15) des éléments combustibles (12), et rentrent dans la partie inférieure plus large (21) de la structure de séparation (6) par le biais de conduits (20) qui s'étendent depuis la paroi de la structure de séparation hydraulique (6) au-dessus de la surface libre (H2) du collecteur froid (8).
